# FASCICULE DE BREVET EUROPEEN

(11) **EP 2 828 214 B1**
(45) Date de publication et mention de la délivrance du brevet: **18.05.2016**
(21) Numéro de dépôt: 13719895.8
(22) Date de dépôt: 19.03.2013
(51) Int. Cl.: C03C 3/085, C03C 3/087, F24C 14/02, F24C 15/04

(54) **PORTE DE FOUR**
BACKOFENTÜR
OVEN DOOR

(30) Priorité: 20.03.2012 FR 1252479
(43) Date de publication de la demande: 28.01.2015
(73) Titulaire: Eurokera S.N.C., 02407 Château Thierry (FR)
(72) Inventeur: PLEVACOVA, Kamila, F-92400 Courbevoie (FR); BRUNET, Edouard, F-75012 Paris (FR); DARGAUD, Olivier, F-92190 Meudon (FR)
(74) Mandataire: Teyssedre, Laurent
(86) Numéro de dépôt international: PCT/FR2013/050577
(87) Numéro de publication internationale: WO 2013/140081

(56) Documents cités:
- WO-A2-2012/076289
- FR-A1- 2 477 525
- JP-A- 2002 047 030
- US-A- 4 438 210
- US-A1- 2005 145 241

## Description

L'invention se rapporte au domaine des portes de four domestique, notamment destinées à obturer des fours domestiques électriques à pyrolyse, communément appelés « fours à pyrolyse ».

Les fours à pyrolyse sont des fours de cuisson électrique destinés à cuire les aliments, dont le nettoyage s'effectue par une forte élévation de température capable de détruire les résidus de cuisson. Typiquement, les cycles de pyrolyse employés par les fours actuels prévoient des températures d'au moins 500°C dans l'enceinte du four.

Les portes de four à pyrolyse comprennent aux moins deux feuilles de verre maintenues solidaires, généralement à l'aide d'un cadre métallique, et séparées par une lame d'air. Cette configuration permet de limiter la température au niveau de la feuille de verre externe, la plus proche de l'utilisateur, afin que ce dernier ne puisse pas se brûler au contact de la porte.

Compte tenu des fortes températures utilisées lors du cycle de pyrolyse, la feuille de verre interne, qui est la feuille de verre la plus proche de l'enceinte du four, doit résister à des contraintes thermomécaniques élevées, en particulier lorsque sa surface est importante. Généralement, la feuille de verre interne est en verre borosilicate, qui présente de faibles coefficients de dilatation, de l'ordre de 33.10⁻⁷/°C

Cette solution n'est toutefois pas dénuée d'inconvénients : les verres borosilicates sont sujets à une certaine déformation à haute température, qui peut réduire l'épaisseur de la lame d'air et par conséquent dégrader l'isolation thermique de la porte. En outre, leurs très faibles coefficients de dilatation thermique en combinaison avec leurs températures de transition vitreuse relativement basses rendent plus difficile l'obtention de grands écarts de contraintes entre le coeur et la surface du verre lors de la trempe thermique. De ce fait, les verres borosilicates utilisés pour les portes de four ne fragmentent pas en cas de casse, ce qui pose des problèmes de sécurité potentiels pour l'utilisateur du four.

US 2005/0145241, état de la technique le plus proche, divulgue une porte de four à pyrolyse domestique dont la composition est du type borosilicate recouverte partiellement d'une couche colorée pour augmenter sa résistance aux chocs thermiques.

WO2012/076289, art antérieur selon l'Art 54(3) CBE, décrit un verre sans bore comprenant en % massique 65-75 SiO2, 11-18 Al2O3, 5-10 MgO, 5-10 CaO qui peut être utilisé pour les fours et cuisinières.

L'invention a pour but de proposer une porte de four dont la feuille de verre interne est mieux susceptible de résister aux températures élevées. Elle a également pour but de proposer une feuille de verre destinée à former la feuille de verre interne d'une porte de four à pyrolyse, qui présente une forte résistance hydrolytique (au sens de la norme ISO 719) et chimique, notamment aux acides (au sens de la norme DIN 12116) et aux bases (selon la norme ISO 695). Un autre but de l'invention est de proposer un verre qui puisse être produit de manière économique par flottage et qui présente à l'état fondu une faible capacité à corroder les réfractaires du four de fusion.

A cet effet, l'invention a pour objet une porte de four domestique comprenant une feuille de verre interne destinée à être la feuille de verre la plus proche de l'enceinte dudit four et une feuille de verre externe, lesdites feuilles de verre étant maintenues solidaires et étant séparées par au moins une lame d'air, ladite feuille de verre interne possédant une composition chimique qui comprend les constituants suivants, en une teneur pondérale variant dans les limites ci-après définies :
- SiO₂: 55-70%
- Al₂O₃: 12-25%
- B₂O₃: 0-0,5%, notamment 0
- Li₂O: 0-2%
- Na₂O + K₂O: 0-5%, notamment 0-1%
- MgO: 0-10%
- CaO: 0-15%
- SrO: 0-15%
- BaO: 0-15%
- ZnO: 0-5%
- RO: 5-25%
Où RO = MgO + CaO + SrO + BaO + ZnO
- TiO₂: 0-3%
- ZrO₂: 0-4%.

L'invention a également pour objet un four domestique électrique à pyrolyse, comprenant une enceinte et une porte de four selon l'invention, la feuille de verre interne étant la feuille de verre la plus proche de ladite enceinte.

Dans l'ensemble du présent texte, les teneurs sont des teneurs pondérales.

La porte de four selon l'invention comprend donc une feuille de verre interne et une feuille de verre externe, ces deux feuilles formant les deux faces planes principales extérieures de la porte, de sorte qu'une fois la porte montée sur le four, la feuille de verre interne se trouve être la plus proche de l'enceinte du four, et la feuille externe se trouve être la plus proche de l'utilisateur.

La porte de four selon l'invention comprend de préférence au moins une feuille de verre intermédiaire située entre la feuille de verre interne et la feuille de verre externe, et séparée de chacune de ces dernières par au moins une lame d'air. Une porte préférée comprend trois ou quatre feuilles de verre, et donc une ou deux feuille(s) de verre intermédiaire(s).

La présence de feuilles intermédiaires permet de créer des lames d'air supplémentaires qui vont encore limiter la température au niveau de la feuille externe de la porte. Grâce à ces lames d'air, des flux d'air de refroidissement vont circuler entre les feuilles de verre, contribuant à leur refroidissement. Le flux d'air peut être forcé, en associant la porte à un dispositif de ventilation établissant un flux d'air circulant du bord inférieur de la porte au bord supérieur. De préférence, la porte de four comprend une ou deux feuille(s) intermédiaire(s) et le flux d'air ne peut circuler qu'entre la feuille intermédiaire et la feuille externe, et le cas échéant entre les feuilles intermédiaires.

Les feuilles de verre peuvent être maintenues solidaires par divers dispositifs mécaniques. A titre d'exemple, la feuille de verre externe peut être associée à un cadre métallique rectangulaire fixé sur sa face interne (tournée vers l'enceinte du four), dans lequel est longée la feuille de verre interne, et le cas échéant la ou chaque feuille de verre intermédiaire. Les feuilles de verre interne et intermédiaire(s) peuvent par exemple être insérées dans des rainures pratiquées dans le cadre. Dans ce cas, la feuille de verre externe présente de préférence une surface supérieure à la surface des autres feuilles de la porte. La feuille de verre interne peut également être déformée à sa périphérie, par exemple à l'aide d'un brûleur, de sorte que ladite périphérie épouse une surface plane parallèle à la surface principale de la feuille de verre, cette surface plane venant s'appuyer sur la face du cadre opposée à la face fixée à la feuille de verre externe. L'augmentation de l'espace entre les feuilles de verre qui en résulte a pour effet d'accroître le flux d'air.

Afin d'assurer le flux d'air susmentionné, le cadre métallique possède de préférence une pluralité de fentes longitudinales au niveau des bords inférieur et supérieur de la porte.

Les feuilles de verre interne et externe sont maintenues parallèles entre elles, par exemple au moyen du cadre métallique précité. Les feuilles de verre intermédiaires peuvent être parallèles aux feuilles de verre interne et externe, ou non.

La feuille de verre externe est de préférence revêtue sur une partie de sa face externe (destinée à faire face à l'utilisateur) d'un décor, notamment sous forme d'émail déposé par sérigraphie, destiné par exemple à masquer les divers éléments de fixation des feuilles de verre et à ne rendre visible que l'intérieur de l'enceinte du four. La feuille de verre interne peut également être revêtue d'un décor émaillé, par exemple déposé par sérigraphie sur la face qui est tournée vers la feuille externe, notamment sur son pourtour. Dans le cas où la feuille de verre interne est trempée thermiquement, la cuisson de l'émail peut avoir lieu lors de l'étape de trempe.

L'épaisseur des feuilles de verre (et notamment de la feuille de verre interne) est de préférence comprise dans un domaine allant de 2 à 5 mm, notamment de 2,5 à 4,5 mm. Des épaisseurs de 3 ou 4 mm sont particulièrement avantageuses en termes de coût, de poids et d'isolation thermique de la porte. L'épaisseur de la ou de chaque lame d'air est typiquement comprise dans un domaine allant de 2 à 6 mm, notamment de 3 à 5 mm. L'épaisseur totale de la porte est généralement comprise dans un domaine allant de 6 à 50 mm, notamment de 15 à 40 mm.

Les feuilles de verre présentent généralement une surface de forme rectangulaire, les coins pouvant éventuellement être arrondis.

Avantageusement, au moins la feuille de verre interne est trempée thermiquement. Les autres feuilles de verre peuvent également l'être. La trempe thermique consiste en un chauffage au-delà de la température de transition vitreuse du verre, suivi d'un refroidissement rapide, généralement à l'aide d'une projection d'air, lequel crée de fortes contraintes de compression superficielles, qui contribuent à renforcer la résistance thermomécanique du verre. Les verres proposés pour la porte de four selon l'invention présentent une bonne aptitude à la trempe, comparée à celle des verres borosilicatés, grâce à leurs coefficients de dilatation thermique, leurs températures de transition vitreuse (ou leurs températures inférieures de recuisson) et leurs modules de Young plus élevés. De ce fait, en cas de casse accidentelle, les verres selon l'invention caseront en une multitude de fragments non-coupants, processus connu sous le nom de « fragmentation ».

La feuille de verre externe, et le cas échéant, la ou chaque feuille de verre intermédiaire est de préférence en verre silico-sodo-calcique. Ces feuilles de verre subissent des contraintes thermomécaniques bien moins fortes que la feuille de verre interne, si bien qu'il est possible d'utiliser des verres courants moins coûteux.

Au moins une feuille de verre, notamment une feuille de verre intermédiaire, est avantageusement revêtue d'une couche bas-émissive, notamment d'une couche d'un oxyde transparent électroconducteur (TCO), tel que par exemple l'oxyde d'étain dopé, notamment au fluor ou à l'antimoine. La présence de telles couches permet de réduire les échanges de chaleur entre les feuilles de verre, contribuant ainsi à améliorer l'isolation thermique de la porte.

Le verre constituant la feuille de verre interne possède de préférence une température inférieure de recuisson d'au moins 580°C, notamment 600°C, et d'au plus 750°C, notamment 720°C ou encore 700°C et 650°C ou 640°C. Une température inférieure de recuisson trop faible est susceptible d'entraîner des déformations de la feuille de verre lors des cycles de pyrolyse. A l'inverse, des températures inférieures de recuisson trop élevées rendraient la trempe thermique du verre plus difficile, car nécessitant des températures de chauffe très élevées. La température inférieure de recuisson (ou température de contrainte) est mesurée selon la norme ISO 7884-7 :1987.

Le verre constituant la feuille de verre interne possède de préférence un coefficient de dilatation thermique linéaire compris dans un domaine allant de 30 (notamment 40) à 80.10⁻⁷/°C, notamment d'au plus 60.10⁻⁷/°C, voire 50.10⁻⁷/°C.

Un coefficient, de dilatation trop faible est préjudiciable à une bonne aptitude à la trempe thermique, tandis qu'un coefficient de dilatation élevé peut entraîner une trop faible résistance au choc thermique. Le coefficient de dilatation est mesuré selon la norme ISO 7991 :1987.

Le facteur de transmission lumineuse au sens de la norme ISO 9050 :2003 de la feuille de verre interne est de préférence d'au moins 85%, voire 88%, ce afin d'assurer la meilleure visibilité de l'enceinte du four par les utilisateurs. L'indice de jaune de la feuille de verre interne est de préférence d'au plus 4, notamment 1, et même 0,5, au sens de la norme ASTM E313.

Le verre constituant la feuille de verre interne possède de préférence une température correspondant à une viscosité de 10^{3,5} poises (appelée « T3,5 ») d'au plus 1480°C, notamment 1425°C ou 1400°C. La température au liquidus du verre est avantageusement d'au plus 1410°C, notamment 1390°C et même 1380°C. De préférence, la température T3,5 est d'au plus 1420°C, la température au liquidus étant inférieure à la température T3,5 et d'au plus 1390°C. Ces conditions permettent d'assurer une bonne aptitude du verre à être produit par le procédé de flottage, qui consiste à déverser le verre sur un bain d'étain fondu.

La silice (SiO₂) est le principal élément formateur du verre. Une teneur minimale est nécessaire afin d'éviter toute dévitrification et d'améliorer la résistance chimique et hydrolytique du verre. De fortes teneurs conduisent toutefois à accroître la viscosité du verre, rendant sa production plus difficile et plus coûteuse en énergie. La teneur en silice est avantageusement d'au moins 56%, notamment 57% ou 58%, voire même 59% ou 60%, ou encore 61% ou 62%. Dans certains modes de réalisation, la teneur en silice peut même être d'au moins 63% ou 64%, notamment 65% ou 66%. Des teneurs en silice d'au plus 69%, notamment 68% sont préférées. Des gammes préférées sont par exemple 60-70%, ou encore 60-68%.

L'alumine (Al₂O₃) permet d'accroître la résistance hydrolytique et la résistance thermomécanique du verre, au détriment toutefois de sa viscosité. La teneur en alumine est de préférence d'au moins 13%, notamment 14% ou 15%, voire 16% ou 17% et même 18%, 19% ou encore 20%. Elle est avantageusement d'au plus 24% ou 23%, voire 22% ou 21%. Des gammes préférées sont par exemple 12-16%, 18-25%, notamment 18-20% ou 20-24%.

La somme des teneurs en silice et alumine (SiO₂ + Al₂O₃) est de préférence comprise dans un domaine allant de 70 à 90%, notamment de 75 à 85%. De trop fortes teneurs peuvent conduire à augmenter la viscosité de manière déraisonnable.

La teneur en oxyde de bore (B₂O₃) est avantageusement nulle, cet oxyde étant coûteux et néfaste du point de vue environnemental, notamment du fait des envols qu'il occasionne lors de la fusion du verre. La règlementation européenne exige en outre la mise en place de mesures de protection lors de la manipulation des porteurs de bore, du fait de leur repro-toxicité supposée.

L'oxyde de lithium (Li₂O) s'est révélé avantageux en tant que fluidifiant du verre, même à très faible teneur. Compte tenu de son coût élevé, sa teneur est avantageusement d'au plus 1,9%, notamment 1,8%, voire 1,7% et même 1,6%. Limiter la teneur en Li₂O permet en outre de pouvoir utiliser certaines matières premières avantageuses, telles que le spodumène, tout en limitant la teneur en oxyde de fer dans le verre final. Selon certains modes de réalisation, la teneur en Li₂O peut être d'au plus 0,5% et même nulle. Selon d'autres modes de réalisation, la teneur en Li₂O est d'au moins 0,5%, notamment 0,6% ou 0,7%, voire 0,8% ou 0,9% et même 1% ou 1,2%, ou encore 1,3% ou 1,4%. Dans ce cas, des plages préférées sont 0,5-1,8% ou encore 1-1,7%.

Les autres oxydes alcalins, soude (Na₂O) et potasse (K₂O) sont plutôt indésirables, car ils augmentent la corrosion des réfractaires par le verre fondu ainsi que le coefficient de dilatation du verre, tout en diminuant sa résistance hydrolytique et chimique. La teneur en Na₂O + K₂O est donc de préférence d'au plus 3%, 2%, 1%, 0,8%, notamment 0,6% et même 0,5% ou 0,4%. Selon certains modes de réalisation, cette teneur peut être nulle.

Les oxydes divalents (MgO, CaO, SrO, BaO et ZnO), collectivement appelés « RO » sont indispensables pour obtenir des viscosités permettant une fusion du verre dans des conditions économiquement avantageuses. Ils permettent également d'accroître la température inférieure de recuisson du verre (lorsqu'il se substitue aux oxydes alcalins), et donc sa résistance à la déformation à température élevée. La teneur en RO est de préférence d'au moins 6%, notamment 7% ou 8%, voire même 9% ou 10%. Pour limiter les risques de dévitrification, elle est de préférence d'au plus 23%, notamment 21% ou 20%, voire 19% ou 18%, et même 17% ou 16%. Dans certains cas, notamment lorsque la teneur en BaO est d'au plus 1%, la teneur en RO peut être d'au plus 15%, notamment 14% ou 13%, voire 12% ou 11% et même 10% ou encore 9%.

Parmi les oxydes divalents, il peut être préféré que la teneur en SrO + BaO + ZnO soit d'au moins 3%, notamment 4% ou 5% et/ou d'au plus 20%, notamment 18% ou 15%. Selon un mode de réalisation, la teneur en SrO + BaO + ZnO varie de 0 à 15% ou de 0 à 10% ou de 0 à 6%, notamment de 0 à 5% ou de 0 à 4%, notamment lorsque la teneur en Li₂O varie de 0 à 0,5%, ou est nulle. Selon un autre mode de réalisation, la teneur en SrO + BaO + ZnO varie de 5 à 20%, notamment 8 à 18%.

La magnésie (MgO) est avantageuse en tant que fluidifiant du verre à haute température. De fortes teneurs peuvent toutefois accroître les risques de dévitrification du verre. La teneur en MgO est de préférence d'au moins 1%, voire 2% ou 3% ou même 5% pour certains modes de réalisation. Elle est avantageusement d'au plus 8%, notamment 7% et même 6%. Selon certains modes de réalisation, la teneur en MgO varie de 5 à 10%, notamment de 5 à 8%. Selon d'autres modes de réalisation, la teneur en MgO varie de 1 à 6%, notamment de 1 à 5%.

La chaux (CaO) est aussi un fluidifiant, mais compte tenu de la corrosion de certains réfractaires induite par cet oxyde, sa teneur est de préférence d'au plus 9%, notamment 8% ou 7%, voire 6% ou 5% et même 4% ou 3%, ou encore 2% ou 1%. Selon certains modes de réalisation, cette teneur peut être nulle. Des plages préférées sont notamment 0-5% ou 0-1%. Dans d'autres modes de réalisation, la teneur en CaO peut varier de 5 à 15%, notamment de 10 à 15%.

La teneur en oxyde de strontium (SrO) peut être d'au moins 1%, notamment 2% et même 3% ou 4%, voire encore 5% ou 6%. Cette teneur peut être d'au plus 9%, voire 8% ou 7%, notamment 6% ou 5%. Selon certains modes de réalisation, la teneur en SrO peut être d'au plus 4%, notamment 3% ou 2%, et même 1% ou encore nulle, notamment lorsque le verre contient au moins 1% de BaO et/ou de ZnO.

La teneur en oxyde de baryum (BaO) peut être d'au moins 1%, notamment 2% et même 3% ou 4%, voire encore 5% ou 6%. Dans certains cas, la teneur en BaO peut être même d'au moins 7%, notamment 8% ou 9%, voire même 10% ou 11%, ou encore 12% ou 13%. Cette teneur peut être d'au plus 9%, voire 8% ou 7%, notamment 6% ou 5%. Selon certains modes de réalisation, la teneur en BaO peut être d'au plus 4%, notamment 3% ou 2%, et même 1% ou encore nulle, notamment lorsque le verre contient au moins 1% de SrO et/ou de ZnO.

La teneur en oxyde de zinc (ZnO) peut être d'au moins 1%, notamment 1,5%, voire 2%. Selon certains modes de réalisation, la teneur en ZnO peut être d'au plus 4%, notamment 3% ou 2%, et même 1% ou encore nulle, notamment lorsque le verre contient au moins 1% de SrO et/ou de BaO.

La teneur, en oxyde de titane (TiO₂) est de préférence d'au plus 2%, notamment 1% ou 0,4%, notamment 0,3% et même 0,2% ou 0,1%, voire 0,05%. Cet oxyde contribue en effet à renforcer l'indice de jaune du verre.

La zircone (ZrO₂) peut contribuer à augmenter la résistance chimique et thermomécanique du verre. Pour cette raison, sa teneur peut avantageusement être d'au moins 0,5%, notamment 1%, ou encore 1,5% ou 2%, voire même 3%. Selon certains modes de réalisation, sa teneur est de préférence d'au plus 3%, notamment 2%. Elle peut même être nulle dans certains cas. De fortes teneurs en zircone conduisent en effet à rendre la fusion du verre plus difficile ainsi qu'à augmenter la température au liquidus.

Il est bien entendu que les différentes gammes préférées décrites précédemment peuvent être combinées entre elles, selon toutes les combinaisons possibles, l'ensemble de ces combinaisons ne pouvant être indiquées dans la présente description. Quelques combinaisons d'oxydes particulièrement préférées sont présentées ci-après :
- Combinaison 1 :

| | |
|---|---|
| Li₂O | 0-0,5%, notamment 0 |
| MgO | 5-10%, notamment 5-8% |
| CaO | 0-5%, notamment 0-1% |
| SrO + BaO + ZnO | 0-15%, notamment 0-10% |

- Combinaison 2 :

| | |
|---|---|
| Li₂O | 0-0,5%, notamment 0 |
| MgO | 1-6%, notamment 1-5% |
| CaO | 0-5%, notamment 0-1% |
| SrO + BaO + ZnO | 5-20%, notamment 8-18% |

- Combinaison 3

| | |
|---|---|
| Li₂O | 0-0,5%, notamment 0 |
| MgO | 0-7%, notamment 3-6% |
| CaO | 5-15%, notamment 10-15% |
| SrO + BaO + ZnO | 0-10%, notamment 0-2% |

- Combinaison 4 :

| | |
|---|---|
| Li₂O | 0,5-1,8%, notamment 1-1,7% |
| MgO | 5-10%, notamment 5-8% |
| CaO | 0-7%, notamment 0-5% ou 0-1% |
| SrO + BaO + ZnO | 0-6%, notamment 0-4% |

- Combinaison 5 :

| | |
|---|---|
| Li₂O | 0,5-1,8%, notamment 1-1,7% |
| MgO | 1-6%, notamment 1-3% |
| CaO | 0-5%, notamment 0-1% |
| SrO + BaO + ZnO | 5-20%, notamment 8-18% |

Plus précisément, selon un premier mode de réalisation préféré, la feuille de verre interne possède une composition chimique qui comprend les constituants suivants, en une teneur pondérale variant dans les limites ci-après définies :

| | |
|---|---|
| SiO₂ | 60-70%, notamment 60-68% |
| Al₂O₃ | 18-25%, notamment 20-24% |
| B₂O₃ | 0 |
| Li₂O | 0-0,5%, notamment 0 |
| Na₂O + K₂O | 0-1% |
| MgO | 5-10%, notamment 5-8% |
| CaO | 0-5%, notamment 0-1% |
| SrO + BaO + ZnO | 0-15%, notamment 0-10%, voire 0-6% et même 0-4% |
| TiO₂ | 0-0,5%, notamment 0-0,05% |
| ZrO₂ | 0-4%, notamment 0. |

Selon un deuxième mode de réalisation préféré, la feuille de verre interne possède une composition chimique qui comprend les constituants suivants, en une teneur pondérale variant dans les limites ci-après définies :

| | |
|---|---|
| SiO₂ | 60-70%, notamment 60-68% |
| Al₂O₃ | 18-25%, notamment 20-24% |
| B₂O₃ | 0 |
| Li₂O | 0-0,5%, notamment 0 |
| Na₂O + K₂O | 0-1% |
| MgO | 1-6%, notamment 1-5% |
| CaO | 0-5%, notamment 0-1% |
| SrO + BaO + ZnO | 5-20%, notamment 8-18% |
| TiO₂ | 0-0,5%, notamment 0-0,05% |
| ZrO₂ | 0-4%, notamment 0. |

Selon un troisième mode de réalisation préféré, la feuille de verre interne possède une composition chimique qui comprend les constituants suivants, en une teneur pondérale variant dans les limites ci-après définies :

| | |
|---|---|
| SiO₂ | 60-70%, notamment 60-68% |
| Al₂O₃ | 12-16%, notamment 14-16% |
| B₂O₃ | 0 |
| Li₂O | 0-0,5%, notamment 0 |
| Na₂O + K₂O | 0-1%, notamment 0-0,5% |
| MgO | 0-7%, notamment 3-6% |
| CaO | 5-15%, notamment 10-15% |
| SrO + BaO + ZnO | 0-10%, notamment 0-2% |
| TiO₂ | 0-0,5%, notamment 0-0,05% |
| ZrO₂ | 0-4%, notamment 0. |

Selon un quatrième mode de réalisation préféré, la feuille de verre interne possède une composition chimique qui comprend les constituants suivants, en une teneur pondérale variant dans les limites ci-après définies :

| | |
|---|---|
| SiO₂ | 60-70%, notamment 60-68% |
| Al₂O₃ | 16-24%, notamment 17-23% |
| B₂O₃ | 0 |
| Li₂O | 0,5-1,8%, notamment 1-1,7% |
| Na₂O + K₂O | 0-0,5% |
| MgO | 5-10%, notamment 0-15%, |
| CaO | 0-7%, notamment 0-1% |
| SrO + BaO + ZnO | 0-6%, notamment 0-4% |
| TiO₂ | 0-0,5%, notamment 0-0,05% |
| ZrO₂ | 0-4%, notamment 0. |

Selon un cinquième mode de réalisation préféré, la feuille de verre interne possède une composition chimique qui comprend les constituants suivants, en une teneur pondérale variant dans les limites ci-après définies :

| | |
|---|---|
| SiO₂ | 60-70%, notamment 60-68% |
| Al₂O₃ | 16-24%, notamment 17-23% |
| B₂O₃ | 0 |
| Li₂O | 0,5-1,8%, notamment 1-1,7% |
| Na₂O + K₂O | 0-15%, notamment 0-0,5% |
| MgO | 1-6%, notamment 1-3% |
| CaO | 0-5%, notamment 0-1% |
| SrO + BaO + ZnO | 5-20%, notamment 8-18% |
| TiO₂ | 0-15%, notamment 0-1% |
| ZrO₂ | 0-4%, notamment 0. |

De préférence, de manière générale comme pour chacun de ces modes de réalisation préférés, la teneur totale en SiO₂, Al₂O₃, Li₂O, Na₂O, K₂O, MgO, CaO, SrO, BaO, ZnO, TiO₂, ZrO₂ est d'au moins 90%, notamment 91% et même 92%, voire 94% ou 95%, ou encore 96% ou 97%.

La composition du verre peut comprendre d'autres constituants.

Il peut s'agir d'agents d'affinage, en une teneur généralement d'au plus 1% ou 2%, notamment choisis parmi les sulfates, les halogènes (notamment le chlore), les sulfures (notamment le sulfure de zinc), les oxydes d'arsenic, d'antimoine, de fer, d'étain, de cérium, de vanadium, ou l'un quelconque de leurs mélanges. Les agents d'affinage servent à éliminer le verre fondu de toutes inclusions gazeuses. Parmi ces agents, l'oxyde d'étain est particulièrement préféré, et sa teneur massique est avantageusement comprise dans un domaine allant de 0,1%, notamment 0,2% à 0,6%, notamment 0,5%.

Il peut également s'agir d'agents colorants, même si leur présence n'est en général pas désirée. Leur teneur est généralement d'au plus 1%, notamment 0,5% et même 0,3%. Il peut s'agir d'agents choisis parmi l'oxyde de fer (Fe₂O₃, FeO), dont la présence est généralement inévitable car il est présent dans beaucoup de matières premières naturelles, dont le sable ou le spodumène, les oxydes d'éléments de transition (cuivre, cobalt, chrome, nickel, manganèse, vanadium...) ou de terres rares (cérium, néodyme, erbium...), les métaux (Ag, Cu, Au...), les sulfures, le sélénium, ou l'un quelconque de leurs mélanges.

La feuille de verre interne est de préférence obtenue par flottage. C'est de préférence aussi le cas pour les autres feuilles de verre de la porte de four. D'autres procédés sont toutefois envisageables, comme le procédé de laminage entre rouleaux ou les procédés d'étirage.

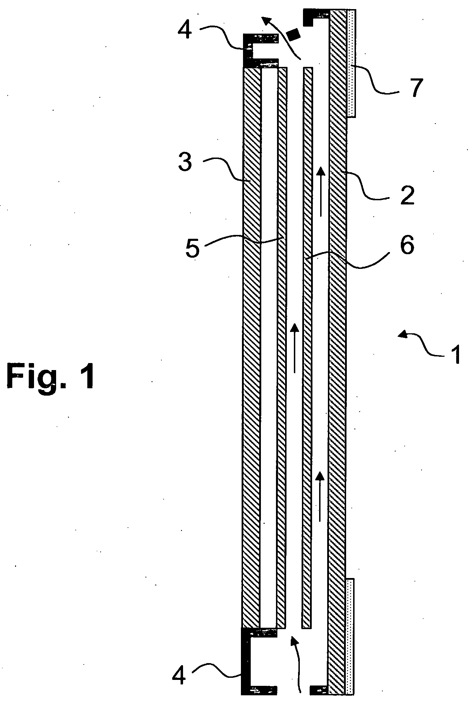

La Figure 1 est une vue en coupe schématique d'une porte de four selon l'invention.

La porte de four 1 comprend une feuille de verre externe 2 et une feuille de verre interne 3 maintenues solidaires et parallèles au moyen d'un cadre métallique 4.

Des feuilles de verre intermédiaires 5 et 6 sont disposées entre les feuilles de verre externe 2 et interne 3 et maintenues par le cadre 4 au niveau des bords latéraux. Elles ménagent ainsi entre les feuilles de verre des lames d'air permettant d'améliorer l'isolation thermique de la porte 1.

Le cadre métallique 4 est fixé à la face interne de la feuille de verre externe 2, et comprend des fentes longitudinales régulièrement espacées au niveau des bords inférieur et supérieur de la porte 1. Ces fentes sont configurées de manière à permettre la circulation d'un flux d'air (schématisé par des flèches verticales) allant du bord inférieur de la porte au bord supérieur, qui permet de refroidir la surface des feuilles de verre et donc de parfaire l'isolation thermique de la porte 1. Dans le cas particulier présenté à la figure 1, le flux d'air ne peut circuler qu'entre la feuille intermédiaire 6 et la feuille externe 2 ainsi qu'entre la feuille intermédiaire 6 et la feuille intermédiaire 5.

La feuille de verre externe 2 comprend sur sa face externe (tournée vers l'utilisateur) un décor en émail 7 déposé par sérigraphie sur le pourtour de la feuille de manière à cacher le cadre métallique 4. La feuille de verre externe 2 est également dotée d'une poignée (non représentée).

La feuille de verre interne 3 est trempée thermiquement et possède la composition chimique particulière précédemment mentionnée, lui conférant une résistance thermomécanique améliorée. Les autres feuilles de verre, 2, 5 et 6, sont en verre silico-sodo-calcique trempé thermiquement. Au moins une feuille de verre intermédiaire 5 ou 6 est revêtue sur au moins une de ses faces d'un revêtement bas émissif sous la forme d'une couche mince d'oxyde d'étain dopé au fluor.

L'invention sera mieux comprise à la lumière des exemples de réalisation non limitatifs qui suivent.

Les tableaux 1 et 2 ci-après présentent des compositions de verre utilisables pour former la feuille de verre interne des portes de four selon l'invention.

Outre les compositions (exprimées en pourcentages pondéraux), les tableaux 1 et 2 font apparaître les propriétés suivantes :
- le coefficient de dilatation thermique linéaire, noté « α » et exprimé en 10⁻⁷/K,
- la température au liquidus, notée « T_{L} » et exprimée en °C,
- la température à laquelle le verre présente une viscosité de 10^{3,5} Poises, notée « T3,5 » et exprimée en en °C,
- la température de transition vitreuse, notée « Tg » et exprimée en °C.

**Tableau 1**

| | 1 | 2 | 3 | 4 | 5 |
|---|---|---|---|---|---|
| SiO₂ | 65,9 | 62,8 | 65,7 | 64,2 | 62,8 |
| Al₂O₃ | 22,3 | 18,4 | 22,2 | 18,8 | 18,4 |
| B₂O₃ | 0 | 0 | 0 | 0 | 0 |
| Li₂O | 0 | 1,5 | 0 | 1,5 | 1,5 |
| Na₂O | 0,6 | 0,16 | 0,6 | 0,15 | 0,2 |
| K₂O | 0,3 | 0,18 | 0,3 | 0,15 | 0,2 |
| MgO | 7,1 | 1,13 | 5,8 | 1,15 | 1,1 |
| CaO | 0 | 0 | 1,7 | 0 | 0 |
| SrO | 0 | 0 | 0 | 9,8 | 4,7 |
| BaO | 2 | 10,0 | 2 | 0,75 | 7,7 |
| ZnO | 1,5 | 1,5 | 1,5 | 1,6 | 1,5 |
| TiO₂ | 0 | 2,4 | 0 | 0 | 0 |
| ZrO₂ | 0 | 1,6 | 0 | 1,6 | 1,6 |
| SnO₂ | 0,3 | 0,3 | 0,3 | 0,3 | 0,3 |
| α | 32 | 41 | 34 | 43 | 41 |
| T_{L} | | 1370 | 1410 | 1380 | 1330 |
| T3,5 | 1413 | 1455 | 1418 | 1454 | 1476 |
| T_{g} | | 745 | | 775 | 776 |

**Tableau 2**

| | 6 | 7 | 8 | 9 | 10 |
|---|---|---|---|---|---|
| SiO₂ | 66,3 | 67,0 | 66,9 | 62,7 | 64,5 |
| Al₂O₃ | 14,8 | 19,6 | 19,6 | 14,0 | 14,4 |
| B₂O₃ | 0 | 0 | 0 | 0 | 0 |
| Li₂O | 0 | 1,5 | 1,5 | 0 | 0 |
| Na₂O | 0 | 0,2 | 1,3 | 0 | 0 |
| K₂O | 0 | 0,2 | 1,6 | 0 | 0 |
| MgO | 5,4 | 1,2 | 3, | 7,8 | 8,8 |
| CaO | 13,2 | 4,2 | 0 | 5,0 | 3,0 |
| SrO | 0 | 0 | 0 | 0 | 0 |
| BaO | 0 | 0,8 | 0,8 | 10,2 | 9,1 |
| ZnO | 0 | 1,6 | 1,6 | 0 | 0 |
| TiO₂ | 0,02 | 2,6 | 2,6 | 0 | 0 |
| ZrO₂ | 0 | 0,8 | 0,8 | 0 | 0 |
| SnO₂ | 0,3 | 0,3 | 0,3 | 0,3 | 0,3 |
| α | 42 | 43,4 | 43,5 | 46,2 | 42,5 |
| T_{L} | 1360 | <1350 | 1310 | 1280 | 1300 |
| T3,5 | 1379 | 1421 | 1439 | 1383 | 1426 |
| T_{g} | 800 | 724 | 700 | | |

## Revendications

1. Porte de four domestique (1) comprenant une feuille de verre interne (3) destinée à être la feuille de verre la plus proche de l'enceinte dudit four et une feuille de verre externe (2), lesdites feuilles de verre (2, 3) étant maintenues solidaires et étant séparées par au moins une lame d'air, ladite feuille de verre interne (3) possédant une composition chimique qui comprend les constituants suivants, en une teneur pondérale variant dans les limites ci-après définies :
| | |
|---|---|
| SiO₂ | 55-70% |
| Al₂O₃ | 12-25% |
| B₂O₃ | 0-0,5%, notamment 0 |
| Li₂O | 0-2% |
| Na₂O + K₂O | 0-5%, notamment 0-1% |
| MgO | 0-10% |
| CaO | 0-15% |
| SrO | 0-15% |
| BaO | 0-15% |
| ZnO | 0-5% |
| RO | 5-25% |
| où RO = MgO + CaO + SrO + BaO + ZnO | |
| TiO₂ | 0-3% |
| ZrO₂ | 0-4%. |

2. Porte de four (1) selon la revendication 1, comprenant au moins une feuille de verre intermédiaire (5, 6) située entre la feuille de verre interne (3) et la feuille de verre externe (2), et séparée de chacune de ces dernières par au moins une lame d'air.

3. Porte de four (1) selon l'une des revendications précédentes, telle que l'épaisseur des feuilles de verre (2, 3, 5, 6) est comprise dans un domaine allant de 2 à 5 mm.

4. Porte de four (1) selon l'une des revendications précédentes, telle qu'au moins la feuille de verre interne (3) est trempée thermiquement.

5. Porte de four (1) selon l'une des revendications précédentes, telle que la feuille de verre externe (2), et le cas échéant, la ou chaque feuille de verre intermédiaire (5, 6) est en verre silico-sodo-calcique.

6. Porte de four (1) selon l'une des revendications précédentes, telle qu'au moins une feuille de verre (2, 3, 5, 6), notamment une feuille de verre intermédiaire (5, 6), est revêtue d'une couche bas-émissive.

7. Porte de four (1) selon l'une des revendications précédentes, telle que le verre constituant la feuille de verre interne (3) possède une température inférieure de recuisson d'au moins 580°C et d'au plus 750°C.

8. Porte de four (1) selon l'une des revendications précédentes, telle que la composition chimique de la feuille de verre interne (3) comprend une teneur en Li₂O d'au plus 0,5%, notamment nulle.

9. Porte de four (1) selon la revendication précédente, telle que la feuille de verre interne (3) possède une composition chimique qui comprend les constituants suivants, en une teneur pondérale variant dans les limites ci-après définies :
| | |
|---|---|
| MgO | 5-10%, notamment 5-8% |
| CaO | 0-15%, notamment 0-1% |
| SrO + BaO + ZnO | 0-15%, notamment 0-10%. |

10. Porte de four (1) selon la revendication 8, telle que la feuille de verre interne (3) possède une composition chimique qui comprend les constituants suivants, en une teneur pondérale variant dans les limites ci-après définies :
| | |
|---|---|
| MgO | 0-7%, notamment 3-6% |
| CaO | 5-15%, notamment 10-15% |
| SrO + BaO + ZnO | 0-15%, notamment 0-2%. |

11. Porte de four (1) selon l'une des revendications 1 à 7, telle que la composition chimique de la feuille de verre interne (3) comprend une teneur en Li₂O comprise entre 0,5 et 1,8%, notamment entre 1 et 1,7%.

12. Porte de four (1) selon la revendication précédente, telle que la feuille de verre interne (3) possède une composition chimique qui comprend les constituants suivants, en une teneur pondérale variant dans les limites ci-après définies :
| | |
|---|---|
| MgO | 5-10%, notamment 5-8% |
| CaO | 0-7%, notamment 0-1% |
| SrO + BaO + ZnO | 0-6%, notamment 0-4%. |

13. Porte de four (1) selon l'une des revendications 8 ou 11, telle que la feuille de verre interne (3) possède une composition chimique qui comprend les constituants suivants, en une teneur pondérale variant dans les limites ci-après définies :
| | |
|---|---|
| MgO | 1-6% |
| CaO | 0-5%, notamment 0-1% |
| SrO + BaO + ZnO | 5-20%, notamment 8-18%. |

14. Porte de four (1) selon l'une des revendications précédentes, telle que la composition chimique de la feuille de verre interne comprend une teneur en SrO + BaO + ZnO d'au moins 3%, notamment 5%.

15. Four domestique électrique à pyrolyse, comprenant une enceinte et une porte de four (1) selon l'une des revendications précédentes, la feuille de verre interne (3) étant la feuille de verre la plus proche de ladite enceinte.

## Patentansprüche

1. Tür für Haushaltsofen (1), umfassend eine innen liegende Glasscheibe (3), die dazu bestimmt ist, diejenige Glasscheibe zu sein, die dem Innenraum des Ofens am nächsten ist, und eine außen liegende Glasscheibe (2), wobei die Glasscheiben (2, 3) fest verbunden gehalten werden und durch mindestens ein Luftmesser getrennt sind, wobei die innen liegende Glasscheibe (3) eine chemische Zusammensetzung aufweist, welche die folgenden Komponenten enthält, in einem Gewichtsanteil, der innerhalb der nachstehend definierten Grenzen variiert:
| | |
|---|---|
| SiO₂ | 55-70 % |
| Al₂O₃ | 12-25 % |
| B₂O₃ | 0-0,5 %, insbesondere 0 |
| Li₂O | 0-2 % |
| Na₂O + K₂O | 0-5 %, insbesondere 0-1 % |
| MgO | 0-10 % |
| CaO | 0-15 % |
| SrO | 0-15 % |
| BaO | 0-15 % |
| ZnO | 0-5 % |
| RO | 5-25 % |
| wobei RO = MgO + CaO + SrO + BaO + ZnO | |
| TiO₂ | 0-3 % |
| ZrO₂ | 0-4 %. |

2. Ofentür (1) nach Anspruch 1, umfassend mindestens eine Zwischenglasscheibe (5, 6), die zwischen der innen liegenden Glasscheibe (3) und der außen liegenden Glasscheibe (2) liegt und von jeder dieser letzten durch mindestens ein Luftmesser getrennt ist.

3. Ofentür (1) nach einem der vorhergehenden Ansprüche, die so beschaffen ist, dass die Dicke der Glasscheiben (2, 3, 5, 6) in einem Bereich von 2 bis 5 mm liegt.

4. Ofentür (1) nach einem der vorhergehenden Ansprüche, die so beschaffen ist, dass die innen liegende Glasscheibe (3) thermisch gehärtet ist.

5. Ofentür (1) nach einem der vorhergehenden Ansprüche, die so beschaffen ist, dass die außen liegende Glasscheibe (2) und gegebenenfalls die oder jede Zwischenglasscheibe (5, 6) aus Silizium-Kalk-Natron-Glas ist.

6. Ofentür (1) nach einem der vorhergehenden Ansprüche, die so beschaffen ist, dass mindestens eine Glasscheibe (2, 3, 5, 6), insbesondere eine Zwischenglasscheibe (5, 6), mit einer niedrig emittierenden Schicht beschichtet ist.

7. Ofentür (1) nach einem der vorhergehenden Ansprüche, die so beschaffen ist, dass das Glas, das die innen liegende Glasscheibe (3) bildet, eine untere Entspannungstemperatur von mindestens 580 °C und höchstens 750 °C aufweist.

8. Ofentür (1) nach einem der vorhergehenden Ansprüche, die so beschaffen ist, dass die chemische Zusammensetzung der innen liegenden Glasscheibe (3) einen Gehalt an Li₂O von höchstens 0,5 %, insbesondere null aufweist.

9. Ofentür (1) nach dem vorhergehenden Anspruch, die so beschaffen ist, dass die innen liegende Glasscheibe (3) eine chemische Zusammensetzung aufweist, welche die folgenden Komponenten enthält, in einem Gewichtsanteil, der innerhalb der nachstehend definierten Grenzen variiert:
| | |
|---|---|
| MgO | 5-10 %, insbesondere 5-8 % |
| CaO | 0-5 %, insbesondere 0-1 % |
| SrO + BaO + ZnO | 0-15 %, insbesondere 0-10 % |

10. Ofentür (1) nach Anspruch 8, die so beschaffen ist, dass die innen liegende Glasscheibe (3) eine chemische Zusammensetzung aufweist, welche die folgenden Komponenten enthält, in einem Gewichtsanteil, der innerhalb der nachstehend definierten Grenzen variiert:
| | |
|---|---|
| MgO | 0-7 %, insbesondere 3-6 % |
| CaO | 5-15 %, insbesondere 10-15 % |
| SrO + BaO + ZnO | 0-10 %, insbesondere 0-2 % |

11. Ofentür (1) nach einem der Ansprüche 1 bis 7, die so beschaffen ist, dass die chemische Zusammensetzung der innen liegenden Glasscheibe (3) einen Gehalt an Li₂O aufweist, der zwischen 0,5 und 1,8 %, insbesondere zwischen 1 und 1,7 % beträgt.

12. Ofentür (1) nach dem vorhergehenden Anspruch, die so beschaffen ist, dass die innen liegende Glasscheibe (3) eine chemische Zusammensetzung aufweist, welche die folgenden Komponenten enthält, in einem Gewichtsanteil, der innerhalb der nachstehend definierten Grenzen variiert:
| | |
|---|---|
| MgO | 5-10%, insbesondere 5-8 % |
| CaO | 0-7 %, insbesondere 0-1 % |
| SrO + BaO + ZnO | 0-6 %, insbesondere 0-4 % |

13. Ofentür (1) nach einem der Ansprüche 8 bis 11, die so beschaffen ist, dass die innen liegende Glasscheibe (3) eine chemische Zusammensetzung aufweist, welche die folgenden Komponenten enthält, in einem Gewichtsanteil, der innerhalb der nachstehend definierten Grenzen variiert:
| | |
|---|---|
| MgO | 1-6 % |
| CaO | 0-5 %, insbesondere 0-1 % |
| SrO + BaO + ZnO | 5-20 %, insbesondere 8-18 % |

14. Ofentür (1) nach einem der vorhergehenden Ansprüche, die so beschaffen ist, dass die chemische Zusammensetzung der innen liegenden Glasscheibe (3) einen Gehalt an SrO + BaO + ZnO von mindestens 3 %, insbesondere 5 % aufweist.

15. Elektrischer Haushaltsofen mit Pyrolyse, umfassend einen Innenraum und eine Ofentür (1) nach einem der vorhergehenden Ansprüche, wobei die innen liegende Glasscheibe (3) diejenige Glasscheibe ist, die dem Innenraum am nächsten ist.

## Claims

1. A domestic oven door (1) comprising an inner glass sheet (3) intended to be the glass sheet closest to the compartment of said oven, and an outer glass sheet (2), said glass sheets (2, 3) being held rigidly connected and being separated by at least one air gap, said inner glass sheet (3) possessing a chemical composition which comprises the following constituents, in an amount by weight within the limits defined hereinafter:
| | |
|---|---|
| SiO₂ | 55-70% |
| Al₂O₃ | 12-25% |
| B₂O₃ | 0-0.5%, in particular 0 |
| Li₂O | 0-2% |
| Na₂O + K₂O | 0-5%, in particular 0-1% |
| MgO | 0-10% |
| CaO | 0-15% |
| SrO | 0-15% |
| BaO | 0-15% |
| ZnO | 0-5% |
| RO | 5-25% |
| where RO = MgO + CaO + SrO + BaO + ZnO | |
| TiO₂ | 0-3% |
| ZrO₂ | 0-4%. |

2. The oven door (1) as claimed in claim 1, comprising at least one intermediate glass sheet (5, 6) located between the inner glass sheet (3) and the outer glass sheet (2), and separated from each of the latter by at least one air gap.

3. The oven door (1) as claimed in either of the preceding claims, the thickness of the glass sheets (2, 3, 5, 6) being within a range from 2 to 5 mm.

4. The oven door (1) as claimed in any of the preceding claims, at least the inner glass sheet (3) being thermally toughened.

5. The oven door (1) as claimed in any of the preceding claims, the outer glass sheet (2) and, optionally, the or each intermediate glass sheet (5, 6) being made of soda-lime-silica glass.

6. The oven door (1) as claimed in any of the preceding claims, at least one glass sheet (2, 3, 5, 6), in particular an intermediate glass sheet (5, 6) being coated with a low-emissivity layer.

7. The oven door (1) as claimed in any of the preceding claims, the glass forming the inner glass sheet (3) possessing a lower annealing temperature of at least 580°C and not more than 750°C.

8. The oven door (1) as claimed in any of the preceding claims, the chemical composition of the inner glass sheet (3) comprising an Li₂O content of not more than 0.5%, in particular zero.

9. The oven door (1) as claimed in the preceding claim, the inner glass sheet (3) possessing a chemical composition which comprises the following constituents, in an amount by weight within the limits defined hereinafter:
| | |
|---|---|
| MgO | 5-10%, in particular 5-8% |
| CaO | 0-5%, in particular 0-1% |
| SrO + BaO + ZnO | 0-15%, in particular 0-10%. |

10. The oven door (1) as claimed in claim 8, the inner glass sheet (3) possessing a chemical composition which comprises the following constituents, in an amount by weight within the limits defined hereinafter:
| | |
|---|---|
| MgO | 0-7%, in particular 3-6% |
| CaO | 5-15%, in particular 10-15% |
| SrO + BaO + ZnO | 0-10%, in particular 0-2%. |

11. The oven door (1) as claimed in any of claims 1 to 7, the chemical composition of the inner glass sheet (3) comprising an Li₂O content of between 0.5% and 1.8%, in particular between 1% and 1.7%.

12. The oven door (1) as claimed in the preceding claim, the inner glass sheet (3) possessing a chemical composition which comprises the following constituents, in an amount by weight within the limits defined hereinafter:
| | |
|---|---|
| MgO | 5-10%, in particular 5-8% |
| CaO | 0-7%, in particular 0-1% |
| SrO + BaO + ZnO | 0-6%, in particular 0-4%. |

13. The oven door (1) as claimed in either of claims 8 and 11, the inner glass sheet (3) possessing a chemical composition which comprises the following constituents, in an amount by weight within the limits defined hereinafter:
| | |
|---|---|
| MgO | 1-6% |
| CaO | 0-5%, in particular 0-1% |
| SrO + BaO + ZnO | 5-20%, in particular 8-18%. |

14. The oven door (1) as claimed in any of the preceding claims, the chemical composition of the inner glass sheet comprising an SrO + BaO + ZnO content of at least 3%, in particular 5%.

15. A domestic electric pyrolytic oven, comprising a compartment and an oven door (1) as claimed in any of the preceding claims, the inner glass sheet (3) being the glass sheet closest to said compartment.
